# EUROPEAN PATENT SPECIFICATION

(11) **EP 3 038 432 B1**
(45) Date of publication and mention of the grant of the patent: **04.10.2017**
(21) Application number: 14837725.2
(22) Date of filing: 21.08.2014
(51) Int. Cl.: H05B 6/12, H05B 6/06, H05B 6/36

(54) **INDUCTION HEATING COOKER**
INDUKTIONSHERD
CUISEUR À INDUCTION

(30) Priority: 22.08.2013 JP 2013171887
(43) Date of publication of application: 29.06.2016
(73) Proprietor: Panasonic Intellectual Property Management Co., Ltd., Osaka-shi, Osaka 540-6207 (JP)
(72) Inventor: SUZUKI, Hidekazu, Osaka 540-6207 (JP); OGAWA, Kenji, Osaka 540-6207 (JP); ISAGO, Hiroshi, Osaka 540-6207 (JP); TAKAHASHI, Tomoya, Osaka 540-6207 (JP)
(74) Representative: Eisenführ Speiser
(86) International application number: PCT/JP2014/004311
(87) International publication number: WO 2015/025523

(56) References cited:
- EP-A1- 1 988 751
- EP-A1- 2 410 815
- EP-A1- 2 475 220
- WO-A1-2010/106769
- WO-A1-2012/098860
- WO-A1-2013/118026
- JP-A- 2005 026 162
- JP-A- 2005 122 962
- JP-A- 2005 302 393
- JP-A- 2009 289 424
- JP-A- 2009 289 522
- JP-A- 2011 090 991
- JP-A- 2011 090 991
- JP-A- 2012 043 669
- JP-B2- 5 147 841

## Description

### TECHNICAL FIELD

The present invention relates to an induction-heating cooker having a heating coil to induction-heat a cooking container and an infrared sensor to detect the temperature of the cooking container.

### BACKGROUND ART

Conventionally, for example, an induction-heating cooker described in Patent Document 1 is known as the induction-heating cooker having the heating coil to induction-heat the cooking container and the infrared sensor to detect the temperature of the cooking container.

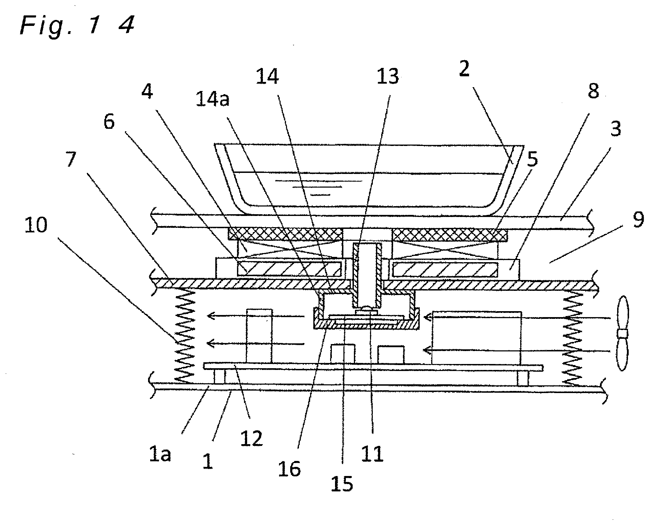

Fig. 14 is a cross-sectional view of a schematic configuration of the induction-heating cooker described in Patent Document 1.

As shown in Fig. 14, the induction-heating cooker described in Patent Document 1 has a main body case 1 and a top plate 3, disposed above the main body case 1, on which a cooking container 2 is placed. Below the top plate 3, a heating coil 4 is disposed to induction-heat the cooking container 2. A heat insulating material 5 is disposed between the top plate 3 and the heating coil 4. Below the heating coil 4, plural rod-shaped ferromagnetic materials (ferrite) 6 are disposed to collect magnetic flux. Below the ferrite 6, a magnetic shield plate 7 is disposed that is made of metal such as aluminum.

The heating coil 4 and the ferrite 6 are held to a coil base 8 made from a resin material, thereby making up a heating coil unit 9. The heating coil 4 is fixed to the upper surface of the coil base 8 by an adhesive, etc. The ferrite 6 is embedded within the coil base 8 or is bonded to the lower surface of the coil base 8.

The heating coil unit 9 is placed on the magnetic shield plate 7. Namely, the magnetic shield plate 7 holds the heating coil 4 and the ferrite 6 by directly holding the coil base 8. The magnetic shield plate 7 is biased upward by a spring 10 disposed on a bottom part 1a of the main body case 1. This causes the heat insulating material 5 to be kept in contact with the lower surface of the top plate 3.

An infrared sensor 11 is disposed below the magnetic shield plate 7. Below the infrared sensor 11, a printed wiring board 12 is disposed in which a control circuit is formed. The control circuit of the printed wiring board 12 generates a high-frequency current to be supplied to the heating coil 4. The control circuit of the printed wiring board 12 controls the output of the heating coil 4, based on a signal output from the infrared sensor 11.

Between the infrared sensor 11 and the top plate 3, a cylindrical body 13 is disposed so as to penetrate the magnetic shield plate 7 and the heating coil 4. This cylindrical body 13 is composed integrally with an upper casing 14 covering the infrared sensor 11. The cylindrical body 13 and the upper casing 14 are made from a resin material. The infrared sensor 11 is mounted on a printed wiring board 15 in which a peripheral circuit including an amplifying circuit is composed and the printed wiring board 15 is mounted on a lower casing 16. The lower casing 16 is made from a resin material or an electrically conductive metal material. With the upper casing 14 and the lower casing 16 fitted into each other, the infrared sensor 11 is contained inside a box composed by the upper casing 14 and the lower casing 16.

The upper casing 14 is attached to the lower surface of the magnetic shield plate 7 as shown in Fig. 14. Alternatively, the magnetic shield plate 7 has an opening formed through which the upper casing 14 can pass and the upper casing 14, passing through this opening, is attached by screws to the lower surface of the coil base 8 on the magnetic shield plate 7.

According to such a configuration, by the ferrite 6 converging the magnetic flux generated from the heating coil 4 and by the magnetic shield plate 7 shielding the magnetic field, the magnetic field has a reduced effect on the infrared sensor 11 and the printed wiring boards 12 and 15 arranged below with respect to the ferrite 6 and the magnetic shield plate 7.

### PRIOR ART DOCUMENT

### PATENT DOCUMENT

Patent Document 1: Japanese Laid-Open Patent Publication No. 2011-90991
Patent Document 2: EP2 410 815 A1 which shows an induction heating cooker wherein the ferrite elements are stored under the coil, in the coil base.

### SUMMARY OF THE INVENTION

### PROBLEM TO BE SOLVED BY THE INVENTION

By the way, in the case of the induction-heating cooker described in Patent Document 1, the ferrite 6 is fixed to the coil base 8 and the heating coil 4 and the magnetic shield plate 7 are attached to the coil base 8 to which this ferrite 6 is fixed. This lowers the efficiency of assembly of the induction-heating cooker and requires much time for the assembly work.

In the case of the induction-heating cooker described in Patent Document 1, the upper casing 14 made from the resin material has a side wall part 14a extending downward so as to surround the infrared sensor 11. To the lower end of the side wall part 14a, the lower casing 16 is attached that is made from the resin material or the electrically conductive metal material. This is for the purpose of protecting the infrared sensor 11 while securing the insulation between the infrared sensor 11 and the magnetic shield plate 7.

For that reason, however, the infrared sensor 11 and the printed wiring board 15 with the infrared sensor 11 mounted thereon are affected by the magnetic field permeating the side wall part 14a of the upper casing 14 (e.g., electromagnetic wave generated from the printed wiring board 12). As a result, the detection accuracy of the infrared sensor 11 can possibly be lowered.

In addition, when the upper casing 14 passes through the opening formed on the magnetic shield plate 7 and is attached to the lower surface of the coil base 8, since the opening on the magnetic shield plate 7 is large, the infrared sensor 11 and the printed wiring board 15 can possibly be strongly affected by the magnetic field generated by the heating coil 4 and passing through the opening of the magnetic shield plate 7.

Accordingly, the object of the present invention is to provide an induction-heating cooker that is excellent in assembly efficiency as well as being capable of suppressing lowering of detection accuracy of an infrared sensor due to the effect of electromagnetic field by securing electrical insulation and magnetic shield with respect to the infrared sensor.

### MEANS FOR SOLVING PROBLEMS

In order to achieve the above object, in one aspect of the invention, there is provided an induction-heating cooker according to claim 1.

### EFFECTS OF THE INVENTION

According to the present invention, an induction-heating cooker is excellent in assembly efficiency as well as being capable of suppressing lowering of detection accuracy of an infrared sensor due to the effect of electromagnetic field by securing electrical insulation and magnetic shield with respect to the infrared sensor.

### BRIEF DESCRIPTION OF DRAWINGS

The above aspects and features of the present invention will become more apparent from the following description of preferred embodiments thereof with reference to the accompanying drawings, and wherein:
Fig. 1 is a cross-sectional view of a schematic configuration of an induction-heating cooker according to a first embodiment of the present invention,
Fig. 2A is a perspective view of a heating coil unit as viewed from the upper surface side of the heating coil unit of the induction-heating cooker according to the first embodiment of the present invention,
Fig. 2B is a perspective view of the heating coil unit as viewed from the lower surface side of the heating coil unit of the induction-heating cooker according to the first embodiment of the present invention,
Fig. 3 is an exploded perspective view of the heating coil unit of the induction-heating cooker according to the first embodiment of the present invention,
Fig. 4 is a partial cross-sectional view of a configuration of an attachment of a spacer to a magnetic shield plate in the induction-heating cooker according to the first embodiment of the present invention,
Fig. 5 is a partial perspective view of an attachment part of the spacer of the induction-heating cooker according to the first embodiment of the present invention,
Fig. 6 is a cross-sectional view of a schematic configuration of the induction-heating cooker according to a second embodiment of the present invention,
Fig. 7A is a perspective view of the heating coil unit as viewed from the upper surface side of the heating coil unit of the induction-heating cooker according to the second embodiment of the present invention,
Fig. 7B is a perspective view of the heating coil unit as viewed from the lower surface side of the heating coil unit of the induction-heating cooker according to the second embodiment of the present invention,
Fig. 8 is an exploded perspective view of the heating coil unit of the induction-heating cooker according to the second embodiment of the present invention,
Fig. 9 is an exploded perspective view of an infrared sensor unit of the induction-heating cooker according to the second embodiment of the present invention,
Fig. 10 is a cross-sectional view of a configuration of the induction-heating cooker according to a third embodiment of the present invention,
Fig. 11 is a cross-sectional view of a configuration of the induction-heating cooker according to a fourth embodiment of the present invention,
Fig. 12 is a cross-sectional view of a configuration of the induction-heating cooker according to a fifth embodiment of the present invention,
Fig. 13 is a cross-sectional view of a configuration of the induction-heating cooker according to a sixth embodiment of the present invention, and
Fig. 14 is a cross-sectional view of a configuration of a conventional induction-heating cooker.

### EMBODIMENTS FOR CARRYING OUT THE INVENTION

An induction-heating cooker according to the invention has a main body outer frame, a top plate that is disposed above the main body outer frame and on which a cooking container is placed, a heating coil disposed below the top plate to induction-heat the cooking container and having a coil opening, an insulation plate on which the heating coil is placed and that has an insulation plate opening below the coil opening, a ferrite on which the insulation plate is placed, a metallic magnetic shield plate on which the ferrite is placed and that has a magnetic shield plate opening below the insulation plate opening, an infrared sensor arranged below the magnetic shield plate opening to detect an infrared ray radiated from the cooking container and passing through the coil opening, the insulation plate opening, and the magnetic shield plate opening, a casing having at least a bottom part located below the infrared sensor, a side wall part extended upward from the bottom part so as to surround the infrared sensor, and a casing opening through which the infrared ray can pass and made from an electrically conductive material, and a spacer intervening between the lower surface of the magnetic shield plate and the upper end of the casing, in contact with the lower surface of the magnetic shield plate and the upper end of the casing, having a spacer opening below the magnetic shield plate opening, and made from a material having electrical insulation.

According to such a configuration, the induction-heating cooker is excellent in assembly efficiency as well as being capable of suppressing lowering of detection accuracy of the infrared sensor due to the effect of electromagnetic field by securing electrical insulation and magnetic shield with respect to the infrared sensor.

Specifically, the magnetic shield plate, the ferrite, the insulation plate, and the heating coil can easily be integrated as one body by sequentially piling up these components. For this reason, the magnetic shield plate, the ferrite, the insulation plate, and the heating coil can be incorporated into the main body outer frame at one time.

The spacer makes it possible to sufficiently secure the electrical insulation between the upper end of the electrically conductive casing and the metallic magnetic shield plate. Therefore, sufficient electrical insulation is also secured between the infrared sensor inside the casing and the magnetic shield plate.

Further, since the space between the lower surface of the magnetic shield plate and the upper end of the casing is small, namely, since the space has only the thickness of the spacer, an electromagnetic wave hardly intrudes through this space. Therefore, the infrared sensor inside the casing is not susceptible to the electromagnetic field and can execute accurate temperature detection.

The spacer may be a frame-like spacer in contact with the upper end of the side wall part of the casing.

The spacer may be in contact with such a part of the lower surface of the magnetic shield plate that is located above the casing, except for the magnetic shield plate opening.

The casing may have a top part facing the bottom part across the infrared sensor. In this case, the casing opening is formed in the top part, and the spacer is in contact with the top part as the upper end of the casing.

The magnetic shield plate may have a convex part raised downward from the lower surface of the magnetic shield plate so as to at least partially surround the circumference of the spacer in contact with the lower surface. This convex part of the magnetic shield plate shields the electromagnetic field that penetrates the spacer and intrudes into the casing. This makes it possible to further suppress the effect of the electromagnetic field on the infrared sensor.

The casing may have a heat-dissipating hole in at least either one of the bottom part and the side wall part. This heat-dissipating hole can suppress a temperature rise of the infrared sensor and as a result, the lowering is suppressed of the detection accuracy of the infrared sensor.

The main body outer frame may have a side wall part and a protruding part protruding from the side wall part toward the center of the inside to support the outer circumferential edge of the lower surface of the magnetic shield plate from below. This makes it unnecessary to separately prepare a support member to support the magnetic shield plate inside the main body outer frame (support member can be omitted).

Embodiments of the present invention will now be described with reference to drawings. The present invention is not to be limited by the following embodiments.

### (First Embodiment)

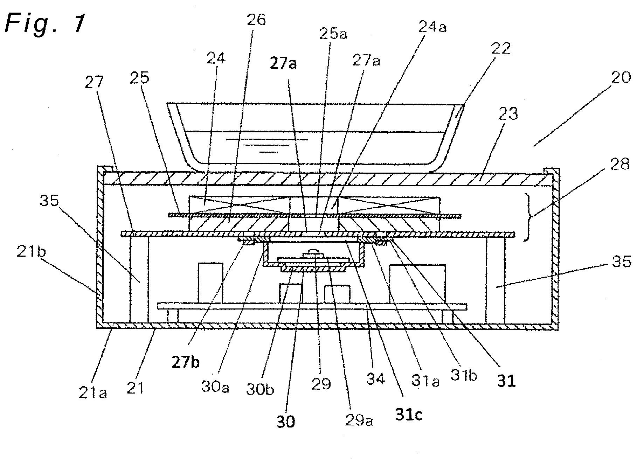

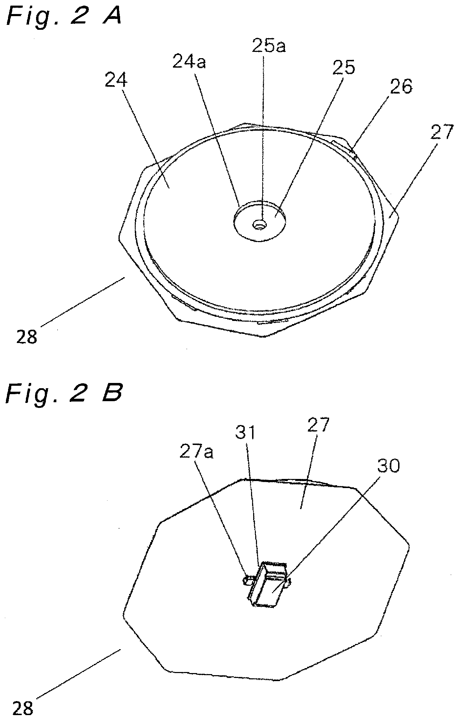

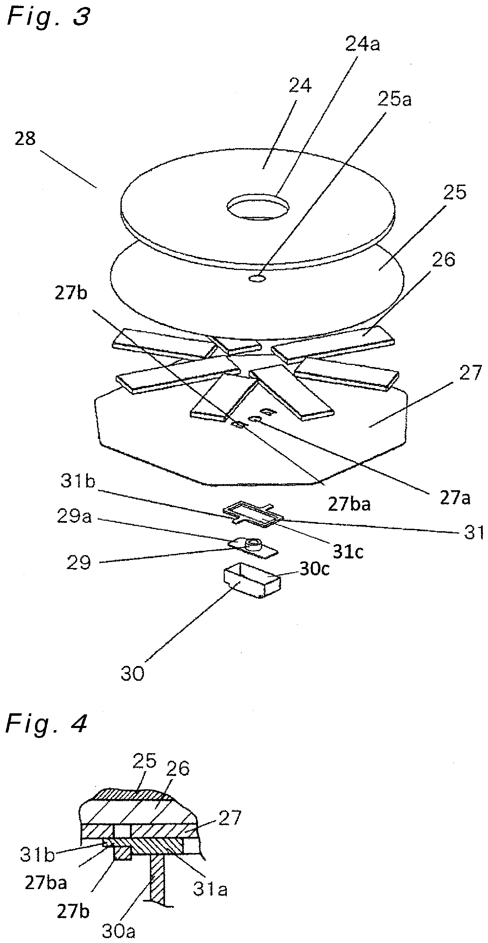

Fig. 1 is a cross-sectional view of a schematic configuration of the induction-heating cooker according to a first embodiment of the present invention. Fig. 2A is a perspective view of a heating coil unit as viewed from the upper surface side of the heating coil unit of the induction-heating cooker according to the first embodiment of the present invention. Fig. 2B is a perspective view of the heating coil unit as viewed from the lower surface side of the heating coil unit of the induction-heating cooker according to the first embodiment of the present invention. Fig. 3 is an exploded perspective view of the heating coil unit of the induction-heating cooker according to the first embodiment of the present invention.

As shown in Figs. 1 to 3, an induction-heating cooker 20 has a box-shape metallic main body outer frame 21 having an opening in its upper part and a crystalized ceramic-made top plate 23 disposed in the upper part of the main body outer frame 21. The main body outer frame 21 has a bottom part 21a and a side wall part 21b extended upward from the outer edge of the bottom part 21a. A cooking container 22 is placed on the top plate 23. Below the top plate 23, a heating coil 24 is disposed to induction-heat the cooking container 22. The heating coil 24 has a coil opening 24a as a hole penetrating the heating coil 24. The coil opening 24a may be formed at the center of the heating coil 24 as shown in Figs. 1 to 3 or may be disposed between windings of the heating coil 24, though not shown.

The heating coil 24 is placed on an insulation plate 25 and is bonded to the insulation plate 25 by an adhesive. The insulation plate 25 is placed on upper surfaces of plural plate-like ferrites 26 and is bonded to these ferrites 26 by the adhesive. Thus, below the heating coil 24, the plate-like ferrites 26 are disposed, with the insulation plate 25 sandwiched in between. The ferrite 26 is a ferromagnetic and has a function of gathering the magnetic flux. The plural ferrites 26 are molded in a plate of a substantially cuboid shape and are arranged radially from the vicinity of the center of the heating coil 24 as seen from the above. The insulation plate 25 is, for example, laminated mica formed in plate shape by laminating the mica. In place of plural plate-like ferrites 26, the ferrite 26 may be, for example, a sheet of disc-like ferrite (which, however, must have a ferrite opening arranged below the coil opening so that the infrared ray can pass through it, as will be described later).

The insulation plate 25 has an insulation plate opening 25a arranged below the coil opening 24a of the heating coil 24.

The ferrite 26 is placed on the magnetic shield plate 27 and is bonded to the magnetic shield plate 27 by the adhesive. Specifically, plural ferrites 26 are bonded to the upper surface of the magnetic shield plate 27 avoiding a magnetic shield plate opening 27b to be described later. The magnetic shield plate 27 is made from an electrically conductive material such as aluminum capable of shielding the magnetic field. Thus, the magnetic shield plate 27, the ferrite 26, the insulation plate 25, and the heating coil 24, by being sequentially piled up from the bottom and bonded to each other, are integrated as a heating coil unit 28. Rigidity (bending rigidity, deflection rigidity, etc.) of the heating coil unit 28 can be secured by the metallic magnetic shield plate 27. For this reason, the heating coil 24, the insulation plate 25, and the ferrite 26 can be made thin. In particular, in a conventional configuration (one shown in Fig. 14), a pressing force of a spring is applied to a heating coil unit to press the heating coil unit against a top plate (to keep the distance between the heating coil unit and the top plate constant), but such a force is not applied to the heating coil unit 28 of this first embodiment. Therefore, the heating coil 24, the insulation plate 25, and the ferrite 26 of this first embodiment do not need the rigidity necessary for resisting the deformation by the pressing force of the spring to press them against the top plate. This makes it possible to achieve lower rigidity, namely, lighter weight and thinner size of these heating coil 24, insulation plate 25, and ferrite 26.

The magnetic shield plate 27 has a magnetic shield plate opening 27a arranged below the insulation plate opening 25a of the insulation plate 25. With the overlapping of the coil opening 24a of the heating coil 24, the insulation plate opening 25a of the insulation plate 25, and the magnetic shield plate opening 27a of the magnetic shield plate 27, the heating coil unit 28 has an opening running through itself in the vertical direction.

With the magnetic shield plate 27 fixed to a support member 35 disposed in the bottom part 21a of the main body outer frame 21, the heating coil unit 28 is fixed inside the main body outer frame 21.

An infrared sensor 29 to detect the temperature of the cooking container 22 is mounted on a printed wiring board 29a in which a peripheral circuit is formed. The printed wiring board 29a on which the infrared sensor 29 is mounted is housed inside a casing 30. Specifically, the infrared sensor 29 detects the infrared ray radiated from the cooking container 22 and passing through the coil opening 24a, the insulation plate opening 25a, the space among the plural ferrites 26, and the magnetic shield plate opening 27a. For this reason, the infrared sensor 29 is arranged below the magnetic shield plate opening 27a. The peripheral circuit of the printed wiring board 29a has, for example, an amplifier composed to amplify an output signal of the infrared sensor 29.

The casing 30 is made from the electrically conductive material such as aluminum capable of shielding the magnetic field. The casing 30 has a bottom part 30b located below the infrared sensor 29 (printed wiring board 29a) and a side wall part 30a extended upward from the bottom part 30b so as to surround the infrared sensor 29. Namely, the casing 30 is of a box shape having a casing opening 30c in its upper part as shown in Fig. 3.

Between the casing 30 and the magnetic shield plate 27, a thin-sheet spacer 31 is arranged as shown in Figs. 1 and 3. The spacer 31 is made from a material having an electrical insulation, for example, rubber or resin.

In the case of this first embodiment, the spacer 31 has a main body part 31a that comes into contact with an upper end of the casing 30 (specifically, the upper end of the side wall part 30a), two tongue-like attachment parts 31b protruding outward from the main body part 31a, and a spacer opening 31c through which the infrared ray can pass to be detected by the infrared sensor 29 housed inside the casing 30. In this first embodiment, the spacer 31 is of a frame state as shown in Fig. 3.

The casing 30 housing the infrared sensor 29 is attached to the spacer 31 and the spacer 31 with the casing 30 attached thereto is attached to the magnetic shield plate 27. As a result, as shown in Fig. 1, the spacer 31 (main body 31a thereof) is interposed between the lower surface of the magnetic shield plate 27 and the upper end of the casing 30, in contact with the lower surface of the magnetic shield plate 27 and the upper end of the casing 30, preventing the magnetic shield plate 27 and the casing 30 from coming into contact with each other.

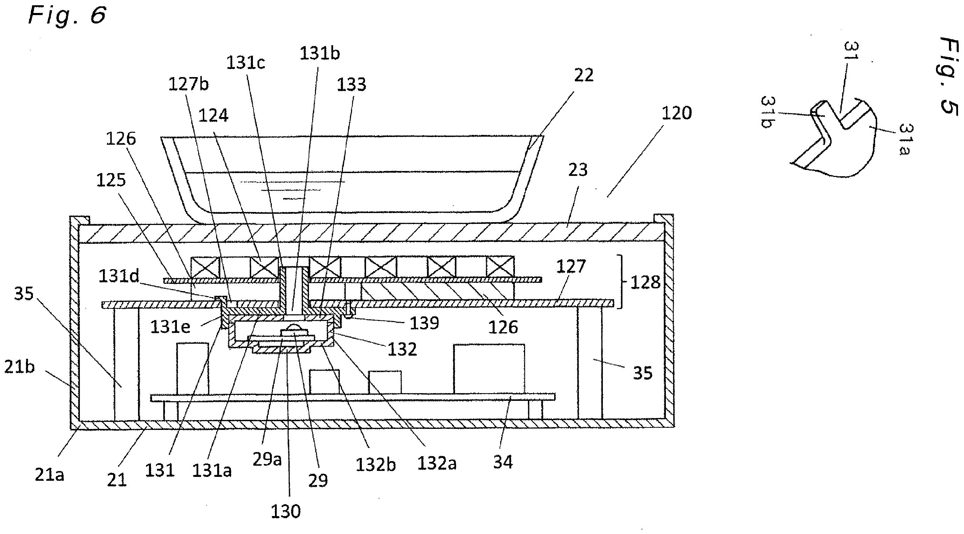

Fig. 4 is a partial cross-sectional view of a configuration of an attachment of the spacer 31 to the magnetic shield plate 27 in the induction-heating cooker 20 according to the first embodiment of the present invention. Fig. 5 is a partial perspective view of the attachment part 31b of the spacer 31 of the induction-heating cooker 20 according to the first embodiment of the present invention.

As shown in Figs. 3 and 4, the magnetic shield plate 27 has two engaging parts 27b formed therein, to be engaged with the two tongue-like attachment parts 31b. Each of the two engaging parts 27b has a first part extending downward from the lower surface of the magnetic shield plate 27 and a second part extending horizontally (direction orthogonal to drawing) from the first part, as shown in Fig. 4. The attachment part 31b of the spacer 31 is inserted into a space 27ba between the second part of the engaging part 27b and the lower surface of the magnetic shield plate 27. After the insertion of one attachment part 31b of the spacer 31 into the space 27ba between the second part of one engaging part 27b and the lower surface of the magnetic shield plate 27, by deforming the spacer 31 using elasticity of the spacer 31 made from rubber or resin, the other attachment part 31b of the spacer 31 gets engaged with the other engaging part 27b of the magnetic shield plate 27. Thus, the spacer 31 is attached to the lower surface of the magnetic shield plate 27.

The attachment of the spacer 31 to the magnetic shield plate 27 is not limited to the engagement of the two tongue-like attachment parts 31b with the corresponding engaging parts 27b. Any method is acceptable if the contact between the spacer 31 and the magnetic shield plate 27 can be maintained.

As shown in Fig. 1, below the infrared sensor 29, a printed wiring board 34 is disposed that has a control circuit including an inverter circuit (not shown).

With respect to the induction-heating cooker configured as above, the operation and the action thereof will now be described.

In the induction-heating cooker shown in this embodiment, as described above, the heating coil 24, the insulation plate 25, the ferrite 26, and the magnetic shield plate 27, by being piled up, are integrated as the heating coil unit 28. For this reason, these can be installed, in a state of the heating coil unit 28, inside the main body outer frame 21. The ferrite 26 is directly fixed to the magnetic shield plate 27, without intervention of other member (e.g., coil base).

As a result, an assembly efficiency of the induction-heating cooker 20 is enhanced and this makes it possible to manufacture the induction-heating cooker 20 inexpensively (as compared with the case of separately installing the heating coil, the magnetic shield plate, etc., inside the main body outer frame or the case of indirectly fixing the ferrite to the magnetic shield plate by way of other member (e.g., coil base).

Such a heating coil unit 28 is made, for example, by executing the bonding, with one of two constituent elements to be bonded to each other being positioned, using an assembly jig, etc., with respect to the other.

The electrical insulation between the heating coil 24 as a charging part and the ferrite 26 is secured by the insulation plate 25. The laminated mica is preferable as a material of the insulation plate 25 since it is excellent in the electrical insulation, has a high heat resistance, and can easily be formed in a thin sheet. The material of the insulation plate 25 is not limited to the laminated mica if it has the required electrical insulation and heat resistance. The insulation plate 25 may be made, for example, from heat-resistant resin.

The control circuit on the printed wiring board 34 includes the inverter and generates a high-frequency current to be supplied to the heating coil 24. The heating coil 24, when supplied with the high-frequency current, generates the magnetic field and induction-heats the cooking container 22 located above the heating coil 24, by this magnetic field.

The infrared ray radiated downward from the cooking container 22 heated by the heating coil 24 is transmitted by the top plate 23, passes through the coil opening 24a, the insulation plate opening 25a, the magnetic shield plate opening 27a, the spacer opening 31c, and the casing opening 30c, and enters the infrared sensor 29. The infrared sensor 29 outputs a signal of a size corresponding to the volume of the entering infrared ray. This output signal is amplified by the peripheral circuit on the printed wiring board 29a. The peripheral circuit outputs the amplified output signal of the infrared sensor 29 to the control circuit on the printed wiring board 34 arranged below. The control circuit controls the output of the heating coil 24, based on the signal output from the infrared sensor 29 by way of the peripheral circuit. This makes it possible to control the temperature of the cooking container 22 with high accuracy.

The ferrite 26 suppresses an expansion of the magnetic flux below the heating coil 24 by converging the magnetic flux present below the heating coil 24, out of the magnetic flux generated from the heating coil 24. This causes the magnetic flux leakage to be suppressed, focusing the magnetic flux, without waste, on the cooking container 22 as well as suppressing the effect of the magnetic field on other constituent elements (infrared sensor 29).

The magnetic shield plate 27 made from the electrically conductive material such as aluminum suppresses the magnetic flux generated from the heating coil 24 leaking downward below the magnetic shield plate 27.

Below and at the side of the infrared sensor 29, there are the bottom part 30b and the side wall part 30a of the casing 30 made from the electrically conductive material such as aluminum. The infrared sensor 29 is covered by the magnetic shield plate 27 disposed above it. The casing 30 is fixed to the magnetic shield plate 27 by way of the thin-sheet spacer 31 having the electrical insulation intervening between the upper end of the side wall part 30a and the lower surface of the magnetic shield plate 27, in contact therewith. For this reason, the distance between the lower surface of the magnetic shield plate 27 and the upper end of the side wall part 30a of the casing 30, namely, the space through which the electromagnetic wave can pass, is small (to make this space small and in the range in which the electrical insulation between these can be secured, the spacer 31 is as much thin as possible). Therefore, the electromagnetic wave generated from the heating coil 24 or the control circuit of the printed wiring board 34 and advancing toward the infrared sensor 29 is efficiently shielded by the casing 30 and the magnetic shield plate 27.

The electrical insulation between the casing 30 and the magnetic shield plate 27 is secured by the thin-sheet spacer 31 having the electrical insulation intervening between the upper end of the side wall part 30a of the casing 30 and the lower surface of the magnetic shield plate 27, in contact therewith.

This makes it possible to suppress an electric surge running from the magnetic shield plate 27 to the infrared sensor 29 by way of the casing 30 when the infrared sensor 29 and the casing 30 are electrically connected. When the insulation is required between the infrared sensor 29 and the casing 30, since the electrical insulation between the casing 30 and the magnetic shield plate 27 is secured by the spacer 31, a low insulation level is sufficient for the insulation between the infrared sensor 29 and the magnetic shield plate 27. Namely, the electrical effect on a control operation of the infrared sensor 29 by the electrical potential of the magnetic shield plate 27 can be suppressed and this makes it possible for the infrared sensor 29 to perform accurate temperature detection.

When the main body outer frame 21 and the magnetic shield plate 27 are electrically connected, the presence of the spacer 31 makes it possible to suppress a leakage current leaking from the infrared sensor 29 to the main body outer frame 21 by way of the casing 30, the magnetic shield plate 27, and the support member 35. When the insulation is required between the main body outer frame 21 and the magnetic shield plate 27, since the electrical insulation between the casing 30 and the magnetic shield plate 27 is secured by the spacer 31, a low insulation level is sufficient for the insulation between the main body outer frame 21 and the magnetic shield plate 27. For example, even when the main body outer frame 21 is connected to a metal accessible to the human body or is grounded, since the insulation between the main body outer frame 21 and the infrared sensor 29 is sufficiently secured by the spacer 31, the support member 35 is not necessarily required to be made from an insulation material and the support member 35 made from an electrically conductive material can be used to secure the safety. Thus, due to the spacer 31 electrically insulating between the casing 30 and the magnetic shield plate 27, the low insulation level is sufficient for the electrical insulation between the infrared sensor 29 and the casing 30 and the electrical insulation between the main body outer frame 21 and the magnetic shield plate 27 and therefore, for example, a reduction in the number of parts and a higher assembly efficiency can be achieved in the induction-heating cooker.

As above, according to this first embodiment, the induction-heating cooker 20 is excellent in the assembly efficiency as well as being capable of suppressing the lowering of the detection accuracy of the infrared sensor 29 due to the effect of the electromagnetic field by securing the insulation and the magnetic shield for the infrared sensor 29.

The casing 30 housing the infrared sensor 29 is attached to the lower surface of the magnetic shield plate 27 by way of the spacer 31 instead of passing through a large opening formed in the magnetic shield plate 27 and being attached to a member (e.g., coil base) on the magnetic shield plate 27. For this reason, it becomes unnecessary to form a large opening in the magnetic shield plate 27. This enables the magnetic shield plate 27 to shield much of the magnetic flux generated by the heating coil 24 and going downward below the magnetic shield plate 27. As a result, the effect of the magnetic field on the infrared sensor 29 and the printed wiring board 34 arranged below the magnetic shield plate 27 is suppressed and the lowering of the detection accuracy of the infrared sensor 29 is suppressed.

### (Second Embodiment)

In this second embodiment, the same constituent element as that of the first embodiment is given the same reference numeral. In the following, description will be made mainly of the constituent elements different from those of the first embodiment.

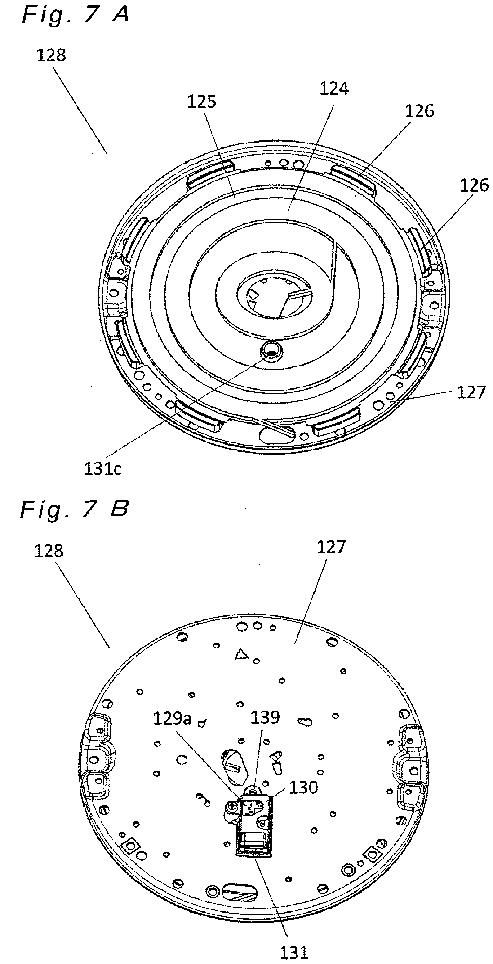

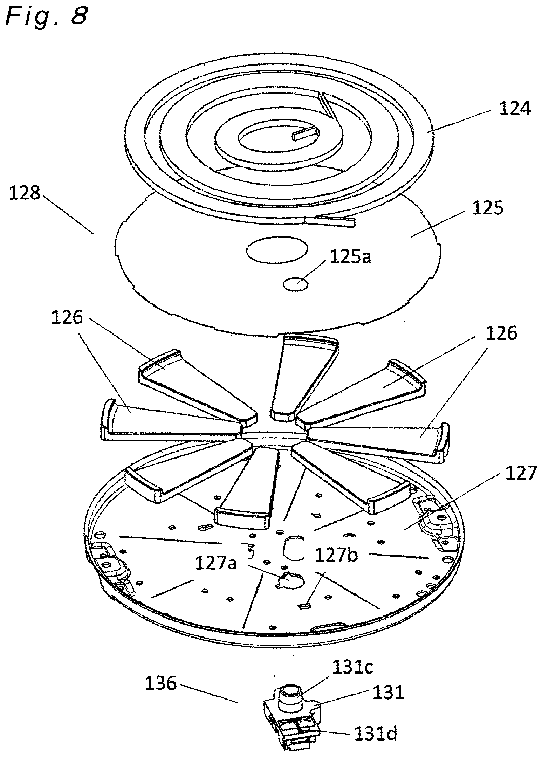

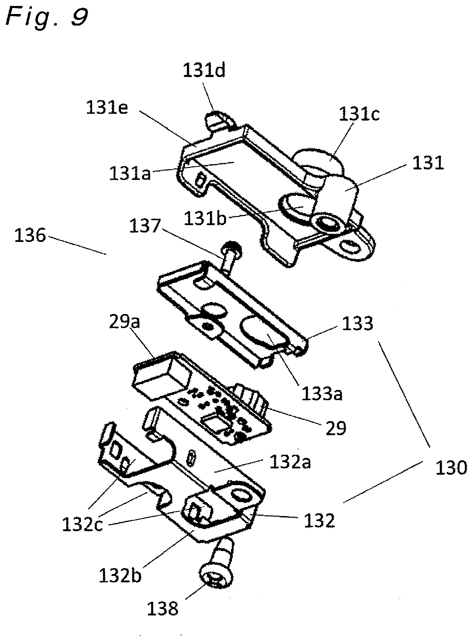

Fig. 6 is a cross-sectional view of a schematic configuration of the induction-heating cooker according to this second embodiment of the present invention. Fig. 7A is a perspective view of the heating coil unit as viewed from the upper surface side of the heating coil unit of the induction-heating cooker according to this second embodiment of the present invention. Fig. 7B is a perspective view of the heating coil unit as viewed from the lower surface side of the heating coil unit of the induction-heating cooker according to this second embodiment of the present invention. Fig. 8 is an exploded perspective view of the heating coil unit of the induction-heating cooker according to this second embodiment of the present invention. Fig. 9 is an exploded perspective view of an infrared sensor unit of the induction-heating cooker according to this second embodiment of the present invention.

As shown in Fig. 6, an induction-heating cooker 120 according to this second embodiment largely differs from the induction-heating cooker 20 described above in that a casing 130 has a top part facing a bottom part across the infrared sensor 29.

Specifically, as shown in Figs. 6 and 9, the casing 130 is composed of a lower side casing 132 and an upper side casing 133 to house the printed wiring board 29a to which the infrared sensor 29 is mounted.

The lower side casing 132 has a bottom part 132b and a side wall part 132a extended upward from the bottom part 132b so as to surround the infrared sensor 29. Namely, the lower side casing 132 is of a box shape having an opening in its upper part.

The upper side casing 133 is of a shape of a lid with which to cover the box-shaped lower side casing 132 and functions as the top part of the casing 130. The upper side casing 133 has a casing opening 133a formed that is arranged above the infrared sensor 29 and through which the infrared ray travelling toward the infrared sensor 29 passes.

The lower side casing 132 and the upper side casing 133 are made from an electrically conductive material such as aluminum capable of shielding the magnetic field. As shown in Fig. 9, the upper side casing 133 is fixed by a screw 137 to the lower side casing 132 with the printed wiring board 29a, on which the infrared sensor 29 is mounted, housed therein. By this, the infrared sensor 29 and the printed wiring board 29a are housed inside the casing 130 composed of the lower side casing 132 and the upper side casing 133.

When heat dissipation is required for the infrared sensor 29 and the printed wiring board 29a, a heat-dissipating hole 132c is formed in at least either one of the bottom part 132b and the side wall part 132a of the lower side casing 132, as shown in Fig. 9. This heat-dissipating hole 132c suppresses the temperature rise inside the casing 130 and suppresses the lowering of the detection accuracy of the infrared sensor 29. The heat-dissipating hole 132c is made to the size of the required minimum limit to secure the insulation and the magnetic shield for the infrared sensor 29.

A spacer 131 is made from a material having the electrical insulation, for example, rubber or resin. The spacer 131 has a thin-sheet main body part 131a in contact with the top part as the upper end of the casing 130 (i.e., the upper surface of the upper side casing 133), a spacer opening 131b through which the infrared ray travelling toward the infrared sensor 29 can pass, a cylindrical part 131c extending upward from the edge of the spacer opening 131b, a claw-like attachment part 131d disposed in the main body part 131a, and a side wall part 131e protruding downward from the outer circumferential edge of the lower surface of the main body part 131a for positioning and holding of the casing 130. While details will be described later, this spacer 131, when attached to the lower surface of a magnetic shield plate 127, is configured to come into contact with such part of the magnetic shield plate 127 that is located above the casing 130, except for a magnetic shield plate opening 127a.

As shown in Figs. 7B and 8, the spacer 131 (infrared sensor unit 136) is fixed by a screw 138 to the lower surface of the magnetic shield plate 127, with its claw-like attachment part 131d having passed through an engaging hole 127b formed on the magnetic shield plate 127 and with its cylindrical part 131c inserted into the magnetic shield plate opening 127a of the magnetic shield plate 127. By this, the spacer 131 (main body part 131a thereof) intervenes between the lower surface of the magnetic shield plate 127 and the upper end of the casing 130 (upper surface of the upper side casing 133), in contact with the lower surface of the magnetic shield plate 127 and the upper end of the casing 130.

To the spacer 131, the casing 130 with the infrared sensor 29 housed therein is attached. Specifically, the casing 130, positioned and held by the side wall part 131e of the spacer 131, is attached to the spacer 131 by a screw 138. This causes the casing 130 and the spacer 131 to be integrated as the infrared sensor unit 136.

The cylindrical part 131c of the spacer 131 passes through the magnetic shield plate opening 127a of the magnetic shield plate 127 in a heating coil unit 128, passing through the space between plural ferrites 126, and passing through an insulation plate opening 125a of an insulation plate 125, as shown in Fig. 6, and reaching the space between the windings of a coil 124, as shown in Fig. 8.

The attachment of the spacer 131 to the magnetic shield plate 127 is not limited to the engagement of the claw-like attachment part 131d and the engaging hole 127b and the screw 39. Any attaching method is acceptable if the contact between the spacer 131 and the magnetic shield plate 127 and the insulation between the magnetic shield plate 127 and the casing 130 can be maintained.

According to this second embodiment, in the same manner as in the induction-heating cooker 20 of the first embodiment described above, the induction-heating cooker 120 is excellent in the assembly efficiency as well as being capable of suppressing the lowering of the detection accuracy of the infrared sensor 29 due to the effect of the electromagnetic field by securing the insulation and the magnetic shield for the infrared sensor 29.

The printed wiring board 29a with the infrared sensor 29 mounted thereon is covered by the top part of the casing 130 (upper side casing 133), except for the area above the infrared sensor 29. For this reason, the infrared sensor 29 is more protected against the electromagnetic wave than in the first embodiment. The electric insulation between the infrared sensor 29 and the magnetic shield plate 127 is secured at a higher level by the electrically insulating spacer 131 (main body part 131a thereof) intervening between the top part of the casing 130 and the lower surface of the magnetic shield plate 127.

It is also possible to bring only the upper end of the side wall part into contact with the spacer instead of bringing the top part of the casing into contact with the spacer. Namely, the casing may be configured so that the upper end of its side wall part is higher than its top part. In such a case as well, the insulation and the magnetic shield for the infrared sensor inside the casing can likewise be secured.

### (Third Embodiment)

This third embodiment is an improved mode of the first embodiment described above. Therefore, in this third embodiment, the same constituent element as that of the first embodiment is given the same reference numeral. In the following, description will be made mainly of the constituent elements different from those of the first embodiment.

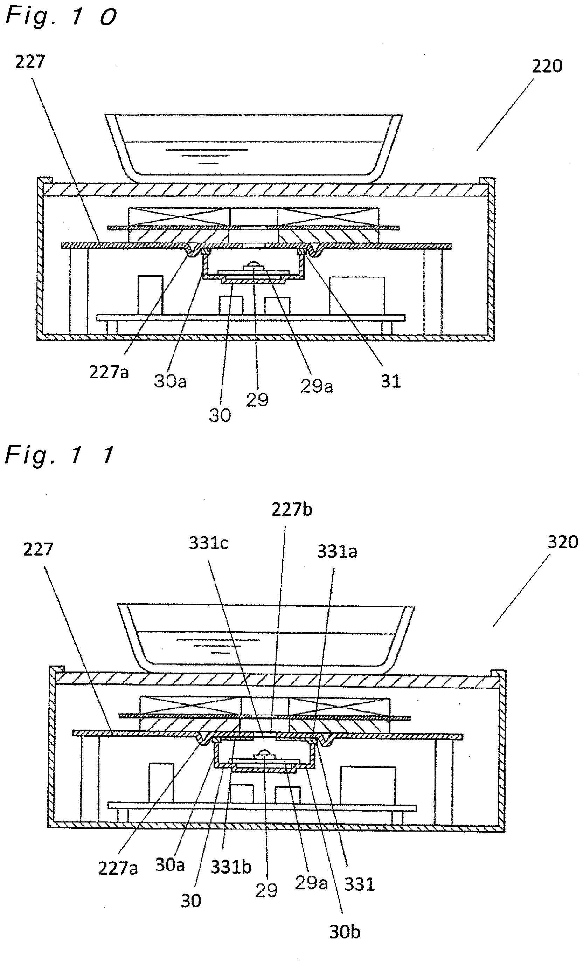

Fig. 10 is a schematic cross-sectional view of a configuration of the induction-heating cooker according to the third embodiment of the present invention.

As shown in Fig. 10, a magnetic shield plate 227 of an induction-heating cooker 220 according to this third embodiment has a convex part 227a raised downward from the lower surface of the magnetic shield plate 227 so as to surround the spacer 31 in contact with the lower surface thereof.

This convex part 227a can shield the electromagnetic wave that passes through the space between the lower surface of the magnetic shield plate 227 and the upper end of the side wall part 30a of the casing 30, namely, penetrates the electrically insulating spacer 31 and enters the casing 30. This makes the effect of the electromagnetic field on the infrared sensor 29 and the peripheral circuit of the printed wiring board 29a smaller than in the first embodiment.

As a result, the induction-heating cooker 220 according to this third embodiment can further secure the insulation and the magnetic shield for the infrared sensor 29 and further suppress the lowering of the detection accuracy of the infrared sensor 29 due to the effect of the electromagnetic field.

The convex part 227a of the magnetic shield plate 227 may be formed by deforming the magnetic shield plate 227. The convex part 227a may surround the entire circumference of the spacer 31 or may partially surround the circumference.

### (Fourth Embodiment)

This fourth embodiment is an improved mode of the third embodiment described above. Therefore, in this fourth embodiment, the same constituent element as that of the third embodiment is given the same reference numeral. In the following, description will be made mainly of the constituent elements different from those of the third embodiment.

Fig. 11 is a cross-sectional view of a schematic configuration of the induction-heating cooker according to the fourth embodiment of the present invention.

As shown in Fig. 11, a spacer 331 of an induction-heating cooker 320 according to this fourth embodiment has a frame-like main body part 331a intervening between the upper end of the casing 30 (upper end of the side wall part 30a thereof) and the lower surface of the magnetic shield plate 227, a cover part 331b extending from the main body part 331a so as to cover the infrared sensor 29 and the printed wiring board 29a housed inside the casing 30, and a casing opening 331c that is formed in the cover part 331b and through which the infrared ray travelling toward the infrared sensor 29 passes. Namely, the spacer 331 is in contact with such part of the lower surface of the magnetic shield plate 227 that is located above the casing 30, except for a magnetic shield plate opening 227b.

The cover part 331b of the spacer 331 enhances the level of the electrical insulation between the infrared sensor 29 and the peripheral circuit on the printed wiring board 29a and the magnetic shield plate 227, as compared with the level of the electrical insulation in the third embodiment in which the spacer has no cover part. For this reason, the distance between the lower surface of the magnetic shield plate 227 and the bottom part 30b of the casing 30 (i.e., distance between the magnetic shield plate 227 and the infrared sensor 29) can be made small. Namely, the casing 30 can be made thin (size in vertical direction can be made small).

The spacer 31 of the induction-heating cooker 20 of the first embodiment may have the same cover part.

### (Fifth Embodiment)

This fifth embodiment is an improved mode of the first embodiment described above. Therefore, in this fifth embodiment, the same constituent element as that of the first embodiment is given the same reference numeral. In the following, description will be made mainly of the constituent elements different from those of the first embodiment.

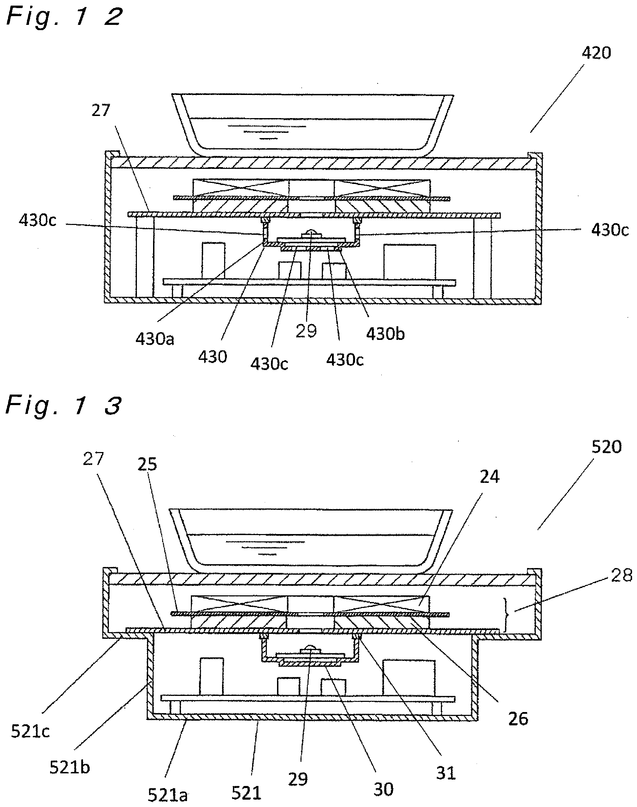

Fig. 12 is a cross-sectional view of a schematic configuration of the induction-heating cooker according to the fifth embodiment of the present invention.

As shown in Fig. 12, a casing 430 of an induction-heating cooker 420 according to this fifth embodiment has a heat-dissipating hole 430c in a side wall part 430a and a bottom part 430b. The heat-dissipating hole may be in at least either one of the side wall part 430a and the bottom part 430b of the casing 430.

The heat-dissipating hole 430 formed in the casing 430 can discharge to the outside the radiation heat radiated from the magnetic shield plate 27 (such a part of the magnetic shield plate 27 that faces the internal space of the casing 430) to the inside of the casing 430. This makes it possible to suppress the temperature rise of the infrared sensor 29 and as a result, suppress the lowering of the detection accuracy of the infrared sensor 29 due to high temperature.

### (Sixth Embodiment)

This sixth embodiment is an improved mode of the first embodiment described above. Therefore, in this sixth embodiment, the same constituent element as that of the first embodiment is given the same reference numeral. In the following, description will be made mainly of the constituent elements different from those of the first embodiment.

Fig. 13 is a cross-sectional view of a schematic configuration of the induction-heating cooker according to the sixth embodiment of the present invention.

As shown in Fig. 13, a main body outer frame 521 of an induction-heating cooker 520 according to this sixth embodiment has a protruding part 521c that protrudes from a side wall part 521b of the main body outer frame 521 toward the center of the inside and supports the outer circumferential edge of the lower surface of the magnetic shield plate 27 from below. In the case of this sixth embodiment, the protruding part 521c is of a step shape. The protruding part 521c is not limited to the step shape but may be of a rib shape, etc.

With the magnetic shield plate 27 supported by the side wall part 521b of the main body outer frame 521, the plural support members can be omitted that are disposed at the bottom part of the main body outer frame and support the magnetic shield plate from below as shown in the first embodiment. As a result, productivity of the induction-heating cooker 520 is enhanced (as compared with the case of disposing plural support members at bottom part of main body outer frame).

In the case of this sixth embodiment, the distance between the top plate 23 and the heating-coil unit 28 can be kept constant by way of the main body outer frame 521, without using the spring as in the conventional configuration (configuration shown in Fig. 14).

The first to the sixth embodiments according to the present invention have been described hereinabove. The configurations of the first to the sixth embodiments may be practiced by appropriately combining them. The present invention is not limited to the embodiments described above. For example, there may be plural heating coils and it is obvious that the embodiments described above can be practiced even if there are plural heating coils.

### INDUSTRIAL APPLICABILITY

As described above, the present invention is applicable to any induction-heating cooker that heats a cooking container by use of a heating coil as well as detecting an infrared ray radiated from the cooking container by an infrared sensor to control the temperature of the cooking container such as, for example, suppressing an excessive temperature rise of the cooking container or keeping the temperature of the cooking container constant, based on results of the detection by the infrared sensor.

## Claims

1. An induction-heating cooker (20, 120, 220, 320, 420, 520) comprising:
a main body outer frame (21, 521);
a top plate (23) that is disposed above the main body outer frame (21, 521);
a heating coil (24) disposed below the top plate (23) adapted to induction-heat and having a coil opening (24a);
a ferrite (26, 126) positioned below the induction heating coil (24) without covering the coil opening (24a), a metallic magnetic shield plate (27, 127, 227) on which the ferrite (26, 126) is placed and that has a magnetic shield plate opening (27a, 127a, 227b) which is aligned with the coil opening;
an infrared sensor (29) arranged below the magnetic shield plate opening (27a, 127a, 227b) adapted to detect an infrared ray radiated from a cooking container (22) when placed onto the top plate (23) over the heating coil (24) and induction heated by the heating coil (24) and passing through the coil opening (24a), and the magnetic shield plate opening (27a, 127a, 227b);
**characterized in that**
an insulation plate (25, 125) is placed between the ferrite (26, 126) and the heating coil (24), the insulation plate (25, 125) having an insulation plate opening (25a, 125a) which is aligned with the coil opening (24a) and the magnetic shield plate opening (27a, 127a, 227b);
a casing (30, 130, 430) having at least a bottom part (30b, 430b) located below the infrared sensor (29), a side wall part (30a, 430a) extended upward from the bottom part (30b, 430b) so as to surround the infrared sensor (29), and a casing opening (30c, 133a, 331c) through which the infrared ray can pass and made from an electrically conductive material; wherein the casing (30, 130, 430) is located entirely below the magnetic shield plate (27, 127, 227) and
a spacer (31, 131, 331) intervening between the lower surface of the magnetic shield plate (27, 127, 227) and the upper end of the casing (30, 130, 430), in contact with the lower surface of the magnetic shield plate (27, 127, 227) and the upper end of the casing (30, 130, 430), having a spacer opening (31c, 131b)below the magnetic shield plate opening (27a, 127a, 227b), and made from a material having electrical insulation.

2. The induction-heating cooker (20, 120, 220, 320, 420, 520) according to claim 1, wherein
the spacer (31, 131, 331) is a frame-like spacer in contact with the upper end of the side wall part of the casing (30, 130, 430).

3. The induction-heating cooker (20, 120, 220, 320, 420, 520) according to claim 1, wherein
the spacer (31, 131, 331) is in contact with such a part of the lower surface of the magnetic shield plate (27, 127, 217) that is located above the casing (30, 130, 430), except for the magnetic shield plate opening (27a, 127a, 227b).

4. The induction-heating cooker (20, 120, 220, 320, 420, 520) according to claim 1, wherein
the casing (30, 130, 430) has a top part facing the bottom part (30b, 430b) across the infrared sensor (29), wherein
the casing opening (30c) is formed in the top part, and wherein
the spacer (31, 131, 331) is in contact with the top part as the upper end of the casing (30, 130, 430).

5. The induction-heating cooker (20, 120, 220, 320, 420, 520) according to any one of claims 1 to 4, wherein
the magnetic shield plate (27, 127, 227) has a convex part raised downward from the lower surface of the magnetic shield plate (27, 127, 227) so as to at least partially surround the circumference of the spacer (31, 131, 331) in contact with the lower surface.

6. The induction-heating cooker (20, 120, 220, 320, 420, 520) according to any one of claims 1 to 5, wherein
the casing (30, 130, 430) has a heat-dissipating hole (430c) in at least either one of the bottom part (30b, 430b) and the side wall part (30a, 430a).

7. The induction-heating cooker (20, 120, 220, 320, 420, 520) according to any one of claims 1 to 6, wherein
the main body outer frame (21, 521) has a side wall part (21b, 521b) and a protruding part (521c) protruding from the side wall part (21b, 521b) toward the center of the inside to support the outer circumferential edge of the lower surface of the magnetic shield plate (27, 127, 227) from below.

## Patentansprüche

1. Induktionsherd (20, 120, 220, 320, 420, 520), umfassend:
einen Grundkörper-Außenrahmen (21, 521);
eine obere Platte (23), welche oberhalb des Grundkörper-Außenrahmens (21, 521) angeordnet ist;
eine Heizspule (24), welche unterhalb der für die Induktionserwärmung angepassten, oberen Platte (23) angeordnet ist und eine Spulenöffnung (24a) aufweist;
einen Ferrit (26, 126), welcher unterhalb der Induktionserwärmungsspule (24) positioniert ist, ohne die Spulenöffnung (24a) zu bedecken, eine metallische Magnetabschirmplatte (27, 127, 227), auf welcher der Ferrit (26, 126) platziert ist und die eine Magnetabschirmplattenöffnung (27a, 127a, 227b) aufweist, welche mit der Spulenöffnung ausgerichtet ist;
einen Infrarotsensor (29), der unterhalb der Magnetabschirmplattenöffnung (27a, 127a, 227b) angeordnet ist und dafür angepasst ist, einen Infrarotstrahl zu detektieren, welcher von einem auf die obere Platte (23) oberhalb der Heizspule (24) gestellten und durch die Heizspule (24) induktionserwärmten Garbehälter (22) ausgesendet wird und durch die Spulenöffnung (24a) und die Magnetabschirmplattenöffnung (27a, 127a, 227b) hindurchtritt;
**dadurch gekennzeichnet, dass**
eine Isolierplatte (25, 125) zwischen dem Ferrit (26, 126) und der Heizspule (24) platziert ist, wobei die Isolierplatte (25a, 125) eine Isolierplattenöffnung (25a, 125a) aufweist, welche mit der Spulenöffnung (24a) und mit der Magnetabschirmplattenöffnung (27a, 127a, 227b) ausgerichtet ist;
ein Gehäuse (30, 130, 430), das zumindest einen Unterteil (30b, 430b), welcher sich unterhalb des Infrarotsensors (29) befindet, einen Seitenwandteil (30a, 430a), welcher sich von dem Unterteil (30b, 430b) nach oben erstreckt und so den Infrarotsensor (29) umgibt, und eine Gehäuseöffnung (30c, 133a, 331c), durch welche der Infrarotstrahl hindurchtreten kann, aufweist und das aus einem elektrisch leitfähigen Material besteht; wobei sich das Gehäuse (30, 130, 430) zur Gänze unterhalb der Magnetabschirmplatte (27, 127, 227) befindet, und
ein Abstandselement (31, 131, 331), das sich zwischen der Unterseite der Magnetabschirmplatte (27, 127, 227) und dem oberen Ende des Gehäuses (30, 130, 430) befindet, in Kontakt mit der Unterseite der Magnetabschirmplatte (27, 127, 227) und dem oberen Ende des Gehäuses (30, 130, 430) steht, eine Abstandselementöffnung (31c, 131b) unterhalb der Magnetabschirmplattenöffnung (27a, 127a, 227b) aufweist und aus einem elektrisch isolierenden Material besteht.

2. Induktionsherd (20, 120, 220, 320, 420, 520) nach Anspruch 1, wobei
das Abstandselement (31, 131, 331) ein rahmenartiges Abstandselement ist, das mit dem oberen Ende des Seitenwandteils des Gehäuses (30, 130, 430) in Kontakt ist.

3. Induktionsherd (20, 120, 220, 320, 420, 520) nach Anspruch 1, wobei
das Abstandselement (31, 131, 331) in Kontakt mit einem solchen Teil der Unterseite der Magnetabschirmplatte (27, 127, 217) steht, der sich oberhalb des Gehäuses (30, 130, 430) befindet, abgesehen von der Magnetabschirmplattenöffnung (27a, 127a, 227b).

4. Induktionsherd (20, 120, 220, 320, 420, 520) nach Anspruch 1, wobei
das Gehäuse (30, 130, 430) einen Oberteil aufweist, der über den Infrarotsensor (29) hinweg dem Unterteil (30b, 430b) gegenüberliegend angeordnet ist, wobei
die Gehäuseöffnung (30c) in dem Oberteil ausgebildet ist, und wobei
das Abstandselement (31, 131, 331) mit dem Oberteil als dem oberen Ende des Gehäuses (30, 130, 430) in Kontakt ist.

5. Induktionsherd (20, 120, 220, 320, 420, 520) nach einem der Ansprüche 1 bis 4, wobei
die Magnetabschirmplatte (27, 127, 227) einen konvexen Teil aufweist, der von der Unterseite der Magnetabschirmplatte (27, 127, 227) nach unten gezogen ist, so dass er das mit der Unterseite in Kontakt stehende Abstandselement (31, 131, 331) zumindest teilweise umgibt.

6. Induktionsherd (20, 120, 220, 320, 420, 520) nach einem der Ansprüche 1 bis 5, wobei
das Gehäuse (30, 130, 430) in zumindest einem von dem Unterteil (30b, 430b) und dem Seitenwandteil (30a, 430a) ein Wärmeableitloch (430c) aufweist.

7. Induktionsherd (20, 120, 220, 320, 420, 520) nach einem der Ansprüche 1 bis 6, wobei
der Grundkörper-Außenrahmen (21, 521) einen Seitenwandteil (21b, 521b) und einen vorstehenden Teil (521c) aufweist, welcher von dem Seitenwandteil (21b, 521b) zu der Mitte des Inneren hin vorsteht, um den Außenumfangsrand der Unterseite der Magnetabschirmplatte (27, 127, 227) von unten her abzustützen.

## Revendications

1. Cuisinière à induction (20, 120, 220, 320, 420, 520), comprenant:
un cadre extérieur de corps de base (21, 521);
une plaque supérieure (23) qui est disposée au-dessus du cadre extérieur de corps de base (21, 521);
une bobine chauffante (24) qui est disposée au-dessous de la plaque supérieure (23) conçue pour le chauffage par induction et qui présente une ouverture de bobine (24a);
une ferrite (26, 126) qui est positionnée au-dessous de la bobine à chauffage par induction (24) sans recouvrir l'ouverture de bobine (24a), une plaque de blindage magnétique en métal (27, 127, 227) sur laquelle est placée la ferrite (26, 126) et qui présente une ouverture de plaque de blindage magnétique (27a, 127a, 227b) qui se trouve en alignement avec ladite ouverture de bobine;
un capteur infrarouge (29) disposé au-dessous de l'ouverture de plaque de blindage magnétique (27a, 127a, 227b) lequel est conçu pour détecter un faisceau infrarouge qui est émis par un ustensile de cuisson (22) posé sur la plaque supérieure (23) située au-dessus de la bobine chauffante (24) et réchauffé par induction par la bobine chauffante (24), et qui traverse l'ouverture de bobine (24a) et l'ouverture de plaque de blindage magnétique (27a, 127a, 227b);
**caractérisée en ce que**
une plaque isolante (25, 125) est placée entre la ferrite (26, 126) et la bobine chauffante (24), la plaque isolante présentant une ouverture de plaque isolante (25a, 125a) qui se trouve en alignement avec l'ouverture de bobine (24a) et avec l'ouverture de plaque de blindage magnétique (27a, 127a, 227b);
un boîtier (30, 130, 430) lequel présente au moins une partie inférieure (30b, 430b) qui se trouve au-dessous du capteur infrarouge (29), une partie de paroi latérale (30a, 430a) qui s'étend depuis la partie inférieure (30b, 430b) vers le haut et entoure ainsi le capteur infrarouge (29), et une ouverture de boîtier (30c, 133a, 331c) à travers laquelle peut passer le faisceau infrarouge, et lequel est constitué en un matériau électroconducteur; ledit boîtier (30, 130, 430) se trouvant entièrement au-dessous de la plaque de blindage magnétique (27, 127, 227), et
un élément d'espacement (31, 131, 331) lequel se trouve entre la partie inférieure de la plaque de blindage magnétique (27, 127, 227) et l'extrémité supérieure du boîtier (30, 130, 430), lequel se trouve en contact avec la face inférieure de la plaque de blindage magnétique (27, 127, 227) et l'extrémité supérieure du boîtier (30, 130, 430), lequel présente une ouverture d'élément d'espacement (31c, 131b) située au-dessous de l'ouverture de plaque de blindage magnétique (27a, 127a, 227b) et lequel est constitué en un matériau électroconducteur.

2. Cuisinière à induction (20, 120, 220, 320, 420, 520) selon la revendication 1, dans laquelle
l'élément d'espacement (31, 131, 331) est un élément d'espacement en forme de cadre qui se trouve en contact avec l'extrémité supérieure de la partie de paroi latérale du boîtier (30, 130, 430).

3. Cuisinière à induction (20, 120, 220, 320, 420, 520) selon la revendication 1, dans laquelle
un élément d'espacement (31, 131, 331) se trouve en contact avec la partie de la face inférieure de la plaque de blindage magnétique (27, 127, 217) qui se trouve au-dessus du boîtier (30, 130, 430), à l'exception de l'ouverture de plaque de blindage magnétique (27a, 127a, 227b).

4. Cuisinière à induction (20, 120, 220, 320, 420, 520) selon la revendication 1, dans laquelle
le boîtier (30, 130, 430) présente une partie supérieure qui est disposée par-dessus le capteur infrarouge (29), à l'opposé de la partie inférieure (30b, 430b), dans laquelle
l'ouverture de boîtier (30c) est ménagée dans la partie supérieure, dans laquelle
l'élément d'espacement (31, 131, 331) se trouve en contact avec la partie supérieure en tant qu'extrémité supérieure du boîtier (30, 130, 430).

5. Cuisinière à induction (20, 120, 220, 320, 420, 520) selon l'une quelconque des revendications 1 à 4, dans laquelle
la plaque de blindage magnétique (27, 127, 227) présente une partie convexe qui s'étend depuis la face inférieure de la plaque de blindage magnétique (27, 127, 227) vers le bas de sorte qu'elle entoure au moins partiellement l'élément d'espacement (31, 131, 331) qui est en contact avec ladite face inférieure.

6. Cuisinière à induction (20, 120, 220, 320, 420, 520) selon l'une quelconque des revendications 1 à 5, dans laquelle
le boîtier (30, 130, 430) présente un orifice d'évacuation de chaleur (430c) ménagé dans la partie inférieure (30b, 430b) et/ou dans la partie de paroi latérale (30a, 430a).

7. Cuisinière à induction (20, 120, 220, 320, 420, 520) selon l'une quelconque des revendications 1 à 6, dans laquelle
le cadre extérieur de corps de base (21, 521) présente une partie de paroi latérale (21b, 521b) et une partie en saillie (521c) qui fait saillie depuis ladite partie de paroi latérale (21b, 521b) vers le centre de l'intérieur afin de soutenir par en-dessous le bord circonférentiel extérieur de la face inférieure de la plaque de blindage magnétique (27, 127, 227).
